# EUROPEAN PATENT SPECIFICATION

(11) **EP 4 086 457 B1**
(45) Date of publication and mention of the grant of the patent: **31.12.2025**
(21) Application number: 21171802.8
(22) Date of filing: 03.05.2021
(51) Int. Cl.: F03D 13/10, F03D 80/00, F03D 80/80

(54) **METHOD FOR MOUNTING AT LEAST ONE COMPONENT OF A WIND TURBINE, WIND TURBINE AND INDICATION DEVICE**
VERFAHREN ZUR MONTAGE VON MINDESTENS EINER KOMPONENTE EINER WINDTURBINE, WINDTURBINE UND ANZEIGEVORRICHTUNG
PROCÉDÉ DE MONTAGE D'AU MOINS UN COMPOSANT D'ÉOLIENNE, ÉOLIENNE ET DISPOSITIF D'INDICATION

(43) Date of publication of application: 09.11.2022
(73) Proprietor: Siemens Gamesa Renewable Energy A/S, 7330 Brande (DK)
(72) Inventor: BOCKELMANN, Paul, 20083 Hamburg (DE); OETTINGER, Sebastian, 27568 Bremerhaven (DE); MALIK, Ali Ahmad, 7400 Herning (DK); SOERENSEN, Jan Bech, 7323 Give (DK)
(74) Representative: SGRE-Association

(56) References cited:
- EP-B1- 3 321 503
- DE-A1- 102016 206 808
- DE-A1- 102018 104 052

## Description

The invention concerns a method for mounting at least one component of a wind turbine to a structural element of the wind turbine, wherein the respective component is manually placed in a respective predefined mounting position and/or orientation with respect to the structural element by a worker and attached to the structural element in this mounting position and/or orientation, wherein an indicator device is used to display at least one marker for the worker that marks the respective mounting position and/or orientation and/or that coincides with a particular feature of the component when the component is placed in the respective predefined mounting position and/or orientation, wherein a projection device of the indicator device is used to project a light pattern towards a surface of the structural element to which the respective component is to be mounted, wherein the marker is formed by, preferably diffuse, reflection of the light pattern by the surface of the structural element and/or at least one surface of the component, wherein the indicator device comprises the at least one projection device and a base. Additionally, the invention concerns a method for assembling a wind turbine and an indicator device.

When assembling a wind turbine, it is typically necessary to attach smaller components, e. g. cable trays and magnet mountings, to larger structural elements of the wind turbine, especially to a bed frame or a nacelle used to implement the pivoting motion of the upper part of the wind turbine, or to other parts, e. g. a tower or a hub. It is often necessary to attach these components in well-defined positions with well-defined orientations. Traditionally, this task is performed by highly skilled workers that can typically achieve the required precision due to their previous experience. The training of these workers is, however, rather complex and there is still a relatively large number of cases in which the required precision is not achieved on the first try. This is especially problematic when this lack of precision is not immediately noticed and only noticed at a later point when a correction of the mounting position and orientation can be highly elaborate.

A major challenge for workers mounting these components is the rather complex shape of the structural elements to which the components should typically be attached. It is often necessary to attach components onto curved surfaces, especially onto surface with varying curvature, and there might be no obvious reference points in the immediate vicinity of the attachment point. Therefore, it is typically not possible to determine the correct position and orientation by manual measurements during the assembly without unreasonable effort. It is therefore often necessary to depend on the visual judgement of the worker.

One approach to avoid the mentioned problems would be to replace the manual attachment of components to the structural elements of a wind turbine by a completely automated production process. It is e. g. already known from the document EP 2 472 103 B1 to use a maintenance robot within a wind turbine to automatically perform certain maintenance tasks. A robot that would allow for an automated mounting of components e. g. within a nacelle with e. g. a goose neck shape, would however be rather complex, especially due to the large surface area of such a nacelle that would need to be worked. Additionally, it would probably be necessary to mount some kind of guide rail or a similar device within the structural element that would later need to be dismounted. Therefore, a complete automation of the mounting process tends to be complex, expensive and slow.

The document DE 10 2016 206 808 A1 discloses a device for monitoring the interior of a gear box. At least one camera is used to generate a 360°-video of the interior of the gear box. This video can then e.g. be viewed using virtual-reality googles.

The document EP 33 21 503 B1 suggests to mark a mounting position of a component in a wind turbine blade by projecting a marker using lasers.

The document DE 10 2018 104 052 A1 concerns a method for placing a marker on an inner surface of a half-shell of a wind turbine blade. A projection device is mounted to a form that is used to form the half-shell via a support means. The projection device is mounted to the support means in such a way, that it can be pivoted and/or shifted with respect to the support means.

The invention is based on the problem of increasing the precision when mounting components to a structural element of a wind turbine, especially during the initial assembly of the wind turbine, and/or reducing the necessary training of workers and/or avoiding the long setup of measurement systems to inform the assembly, while keeping the technical complexity of the process and therefore the cost relatively low.

This problem is solved by the initially discussed method, wherein the indicator device additionally comprises at least one actuator for moving and/or orienting the projection device with respect to the base, wherein the actuator is controlled to position and/or orient the projection device prior to and/or during the projection of the light pattern to position and/or orient and/or scale the respective marker, wherein the force provided by the actuator and/or the force acting on at least one module of the indicator device, especially a component connecting the base to the projection device, is measured and a further movement of the actuator is stopped, when the force exceeds a respective given threshold.

The invention is based on the idea of only automating those parts of the process that are hard to perform for a worker and that can be automated with reasonable effort, especially the identification of the correct mounting position and orientation, while still performing the mounting itself manually by a worker and therefore avoiding e. g. the complexity of needing to reach various positions on a rather large surface of a structural element of a wind turbine by a robot or a similar device. The inventive method can be especially useful, when components are mounted to a structural element, e. g. a bed frame, a nacelle, a hub etc., before this component is mounted to other large structural elements of the wind turbine. The method can therefore e. g. be performed in a production hall. This can simplify the process of aligning the indicator device with the structural element and therefore the displaying of the marker in the correct position and/or orientation.

The general idea of the invention of allowing for an easy and precise positioning and orienting of components with respect to the structural element by displaying at least one marker, can be performed in a variety of ways. A large part of the following description focusses on the use of a light projection to display the marker, since this approach can be implemented with low technical complexity in most use cases with a very good robustness and precision. Another approach outside of the scope of the invention would e. g. be the use of an augmented reality device that will also be described in more detail later.

A projection device of the indicator device is used to project a light pattern towards a surface of the structural element to which the respective component is to be mounted, wherein the marker is formed by, preferably diffuse, reflection of the light pattern by the surface of the structural element and/or at least one surface of the component. It is e. g. possible to project a fixed light pattern that can be shifted and/or scaled and/or rotated by the indicator device, e. g. by moving the whole indicator device or a module of the indicator device, especially the projection device, e. g. by a robot arm. It is however also possible that an adjustable pattern can be projected, e. g. by using multiple lighting elements that can be selectively switched on or off and/or moved with respect to each other, e. g. by using multiple laser pointers, by using an LCD- or DLP-element in the projection path, etc.

The projection device can comprise one or two laser pointers. Alternatively, two projection devices of the indicator device can be used to display a respective marker, wherein each projection device comprises a laser pointer. It is also possible that the projection device comprises more than two laser pointers and/or that more than two projection devices are used to display more than two markers.

The use of at least one laser pointer to display the marker or markers is advantageous, since a light spot projected by a laser pointer can mark a position with a very high accuracy, even when the laser is projected over an extended distance. Using two such spots allows to not only define the mounting position but also the orientation. It is e. g. possible that the connecting line between the projected dots corresponds to a certain direction on the component to be mounted.

Preferably, the two or more spots correspond to two or more defined positions on the component when it is placed in the mounting position and orientation. These positions on the component can correspond to certain features defined by the shape of the component, e. g. to corners, holes, etc. of the component. It is, however, also possible to mark these positions by dedicated markings that are e. g. marked by indentions, paint, etc.

When the projection device comprises two laser pointers that have a fixed position and orientation with respect to each other, the spacing between the two projected dots can vary depending on the orientation of the surface of the structural element with respect to the projection direction of the laser beams. It is therefore e. g. possible to use one of the spots to define the mounting position and use the other spot only to define a direction, e. g. by aligning an edge of the component or a marker painted on the component with the spots.

On the other hand, a variation of the relative position and/or orientation of multiple used laser pointers by e. g. at least one actuator, e. g. when the laser pointers are part of distinct projection devices, does allow for an individual placement of each of the spots. This can allow for a projection of a marker that is easier to interpret for the worker. It is e. g. possible that the spots are to be aligned with the same features of a certain type of component for a variety of component sizes and/or mounting positions and/or orientations.

Instead of using two laser pointers to define the mounting position and orientation, it would also be possible to use a single laser pointer with a diffraction grating that projects a light pattern with a defined direction, e. g. a line or an arrow. This can reduce the complexity of the indicator device but might lead to problems due to a distorted pattern when projecting on a complexly shaped surface of a structural element.

The indicator device comprises the at least one projection device, a base and at least one actuator for moving and/or orienting the projection device with respect to the base, wherein the actuator is controlled to position and/or orient the projection device prior to and/or during the projection of the light pattern to position and/or orient and/or scale the respective marker. The position of the base with respect to the surface of the structural element can be fixed. Ways for achieving a defined position of the base with respect to the surface will be discussed in more detail below. The position and orientation of the projection device can in this case e. g. be directly defined, e. g. by manually adjusting the projection device during a learning process and by recalling the learned pose at a later point in time, e. g. each time the respective component should be mounted to a respective structural element.

Additionally or alternatively, the position and orientation of the base and/or the projection device itself can be determined based on sensor data and the actuator can be controlled using this sensor data. Examples for this approach will be discussed in more detail later.

The actuator can be a relatively simply actuator that e. g. only allows for a rotation around a defined axis and/or a one-dimensional movement. Preferably, a more complex movement for the projection device with respect to the base is possible, e. g. a movement with six degrees of freedom. This can e. g. be achieved by mounting the projection device to a robot arm that can e. g. have a sixth axis of movement.

An actuator, especially a robot arm, carrying the projection device can especially comprise a tool holder that can be used to mount a projection device or components of the projection device, e. g. the at least one laser pointer discussed above, and/or other tools, e. g. tools that might be used by a worker to mount the component.

In a preferred embodiment of the method, multiple components are mounted to the structural element of the wind turbine in a respective predefined mounting position and/or orientation, wherein the actuator is controlled to change the position and/or orientation of the projection device after at least one of the components is attached to the structural element to change the position and/or orientation of the marker with respect to the structural element before a further one of the components is placed in its predefined mounting position and/or orientation.

Additionally or alternatively, it is possible to modify the projected light pattern before the further one of the components is placed in its predefined mounting position and/or orientation. In the simplest case, the pattern can only be scaled, e. g. by changing the distance between two projected spots of a respective laser pointer. It is, however, also possible to perform more complex changes to the projected light pattern, e. g. to project a part number of the component to be mounted, etc.

Preferably, the change of the position and/or orientation and/or pattern of the marker can be triggered by the worker, e. g. by a user interface of the indicator device. The user interface can e. g. allow the user to switch to the next component to be mounted and therefore to the next position and/or orientation and/or pattern to be used for the marker. Optionally, the user can also switch back to the previous component, e. g. if he accidently switched to the next component.

It is e. g. possible to use a wearable user interface that can e. g. be arranged at the user's wrist or some other easily reachable part of the worker's body and can e. g. comprise at least one button for switching to the next component. Alternatively, the user interface could e. g. be implemented by detected gestures, e. g. arm gestures of the worker, by voice control, etc. A respective sensor of the indicator device could e. g. be used to detect gestures of the user and/or voice input.

Instead of using a manual control of the projected pattern, the position and/or orientation and/or pattern of the marker could automatically change, e. g. with a timing that could be determined during an initial training of the indicator device that is described below.

The actuator can be controlled to position and/or orient the projection device in a predefined pose prior to and/or during the projection of the light pattern to form the respective marker, wherein the predefined pose is defined in a preparatory step by manually adjusting the pose of the projection device, especially while the light pattern is emitted, and recording pose information describing this pose via the actuator and/or at least one sensor.

The preparatory step can be part of the method according to the present invention or it can be performed prior to the execution of the method according to the present invention, only defining the pose information used within the present invention.

The preparatory step can e. g. be performed by positioning the base in a well-defined position with respect to a reference structural element that is used for reference during the training. Prior to or after this positioning, a reference component can be mounted in the desired position and/or orientation with respect to the reference structural element. This can e. g. be achieved with the help of a well-trained human expert or by using some other assistant method for determining the correct position and/or orientation of the reference component that might e. g. be slower or more technically elaborate than the inventive method. After these steps the projection device can be manually adjusted while the light pattern is emitted, until the marker is projected at the position and/or with an orientation that matches the position and/or orientation of the reference component. The manual selection of the position and/or orientation of the projection device can e. g. be performed by moving the projection device by hand or by adjusting the position and/or orientation of the projection device by controlling the actuator or actuators of the indicator device using a user interface of the indicator device.

The movement of the projection device from an initial position to this pose or the final pose can be registered, e. g. by reading out the pose information from the actuator or actuators themselves or by using a sensor or multiple sensors that especially determine relative positions of components, that couple the base to the projection device, with respect to each other. The acquisition of this position can especially be manually triggered.

The reference structural element can then be replaced by a different structural element to mount the component to that structural element. Alternatively, it would be possible to move the base to a new position that is equivalent to the well-defined position for the new structural element. Different approaches for achieving a well-defined position of the base and/or the projection device with respect to a given structural element will be discussed below.

The indicator device, especially the base of the indicator device, can be connected to the structural element and/or to a further component, the further component having a defined position and/or orientation with respect to the structural element, by a form fit and/or positioned against at least one respective mechanical stop formed by the structural element or the further component to define the relative position and orientation of the base with respect to the structural element prior to and/or during the projection of the light pattern towards a surface of the structural element. By using such a form fit or at least one stop, a well-defined position and orientation of the base or a further component of the indicator device, that is preferably rigidly connected to the base, with respect to the structural element can be achieved.

As an alternative to the use of a form fit and/or the use of the at least one mechanical stop to achieve the predefined position, machine vision could be used to assist the placement of the base or the indicator device in the predefined position and/or orientation and/or an actual position and/or orientation of the base or indicator device could be detected using machine vision and the projection device can be positioned and/or oriented based on this information. The use of machine vision or, in more general terms, the use of a sensor to control the projection will be discussed in more detail later.

The further component can be a component of the wind turbine or of an infrastructure that supports the structural element during the mounting of the component, e. g. a production hall. A form fit can e. g. be achieved by inserting pegs of a component of the indicator device, especially of the base, into holes of the structural element or a component connected to the structural element. The structural element can e. g. comprise holes for bolting the structural element to a further component of the wind turbine, e. g. at a flange, and these holes can be used to house pegs of the indicator device or vice versa.

When mechanical stops are used to position the indicator device, especially the base, preferably at least two surfaces of the indicator device, especially the base, can be placed against two stops that are arranged at an angle to not only define the position but also the orientation of the indicator device, especially of the base.

In principle, it would be possible to use a fixed connection between the projection device and the base or some other part of the indicator device that is connected to the structural element and/or the further component or that is placed against the at least one mechanical stop. In this case, the connection or the at least one stop would already define the position of the marker. It would e. g. be possible to use different connection points and/or different stops to achieve different marker positions, e. g. to mount multiple components to the same structural element.

As previously discussed, it is, however, advantageous to allow for a relative movement of the projection device with respect to a base that is in a defined position with respect to the structural element, which e. g. allows for the attachment of several components by sequentially displaying several markers with different positions and/or orientations.

The position and/or orientation of at least one module of the indicator device, especially of the base and/or the projection device, with respect to the structural element or to a further component, the further component having a defined position and/or orientation with respect to the structural element, can be determined using at least one sensor, wherein the actuator is controlled to position and/or orient the projection device depending on the determined position and/or orientation of the module of the indicator device. The sensor can be mounted to the module and detect a certain feature or marker of the structural element and/or the further component. Alternatively, the sensor can be mounted in a well-defined position and/or orientation with respect to the structural element and detect a feature and/or marker of the module.

Sensors that can detect certain features and/or markers on objects and determine a relative position from this information are well-known in the prior art. The sensor could e. g. be a camera, especially a time-of-flight camera or a stereo camera, and well-known approaches for feature detection in images could be used to detect e. g. through holes, flanges, printed markers, etc. of the structural element or some other component.

Additionally or alternatively, at least one sensor, e. g. an ultrasound sensor or a radar sensor, could be used to determine the distance between the module and a defined position or a relative position of components could be determined by a sensor comprising a sender and a receiver, the sender being placed in a defined position with respect to the structural element and the receiver attached to the module of the indicator device or vice versa.

The force and/or torque provided by the actuator and/or the force and/or torque acting on at least one module of the indicator device, especially on a module connecting the base to the projection device, is measured and a further movement of the actuator is stopped, when the force and/or torque exceeds a respective given threshold. Limiting the maximum force and/or torque allows the indicator device to safely operate in the same space as the worker, even when a relative position with respect to the worker is not explicitly monitored. The threshold for the force can e. g. be between 10 N and 30 N, especially approximately 20 N. The threshold for the torque can be between 3 Nm and 15 Nm, especially 10 Nm.

In an alternate embodiment outside the scope of the invention, the indicator device can be or comprise an augmented reality headset that superimposes the marker into the field of view of the worker. Using an augmented reality headset instead of the previously mentioned projection device to display the marker can be advantageous, e. g. when the worker is attaching components in a multitude of positions that cannot easily be marked by a single projection device. The augmented reality can e. g. be based on a 3D-CAD model of the environment of the worker, including the structural element. Well-known approaches, e. g. a tracking of certain features in the surroundings by a camera attached to the headset, can be used to register the headset within the 3D model. Since it is, however, challenging in many applications to achieve a sufficient precision of this registration, the previously discussed approach that uses a projection device to display the marker can be easier to implement in many cases.

Multiple approaches for displaying markers in the field of a view of a user are known in the context of augmented reality headsets. It is e. g. possible to use semi-transparent glasses that super impose the marker in the view through the glasses, e. g. by integrating an LCD-panel within the semi-transparent glass. This approach and other approaches for displaying markers in augmented reality displays, e. g. by projecting a marker on the eye background of a user, are known from different augmented reality applications and are therefore not discussed in detail.

The structural element can be a bed frame and/or a nacelle, especially a nacelle having a goose neck shape, of the wind turbine. These components can comprise large curved surfaces that have no or very little features close to a desired mounting position of a component. Therefore, the use of a marker to assist a worker in placing and orienting a component is especially relevant for these structural elements.

The attachment of the component to the structural element can be performed by a magnet mounting and/or welding and/or using holes formed by drilling. A connection via holes can be performed by screwing, bolting, etc. When holes formed by drilling are used to mount the component, the marker can especially be already used to define the positions of the holes. The component can e. g. be a cable tray or some other component mounted by a magnet mounting.

The invention also concerns a method for assembling a wind turbine, wherein the method comprises a step of attaching at least one component to a structural element of the wind turbine, wherein this step is performed using the method for mounting at least one component according to the present invention. The attachment of the component to the structural element can especially be performed before the structural element is mounted to another structural element of the wind turbine, e. g. before a bed frame or a nacelle is mounted to a tower of the wind turbine. The mounting of the component to the structural element can especially be performed in a controlled environment, e. g. within a production hall.

A wind turbine that is assembled using the inventive method for assembling a wind turbine and/or that comprises at least one component that is attached to a structural element of the wind turbine using the method for mounting at least one component according to the present invention, is also disclosed.

The invention also concerns an indicator device that is designed to be used as the indicator device in the previously discussed method according to the present invention. A detailed description of such an indicator device was already given with respect to the previously discussed method for mounting at least one component of a wind turbine to a structural element of the wind turbine. Features discussed with respect to this method concerning the indicator device can be transferred to the indicator device and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an exemplary embodiment of a wind turbine according to the present invention,
- Figs. 2 and 3: illustrations concerning an exemplary embodiment of the method according to the present invention,
- Fig. 4: an exemplary embodiment of the indicator device according to the present invention, and
- Fig. 5: an alternate embodiment of an indicator device outside the scope of the present invention used in an alternate example of a method outside the scope of the present invention.

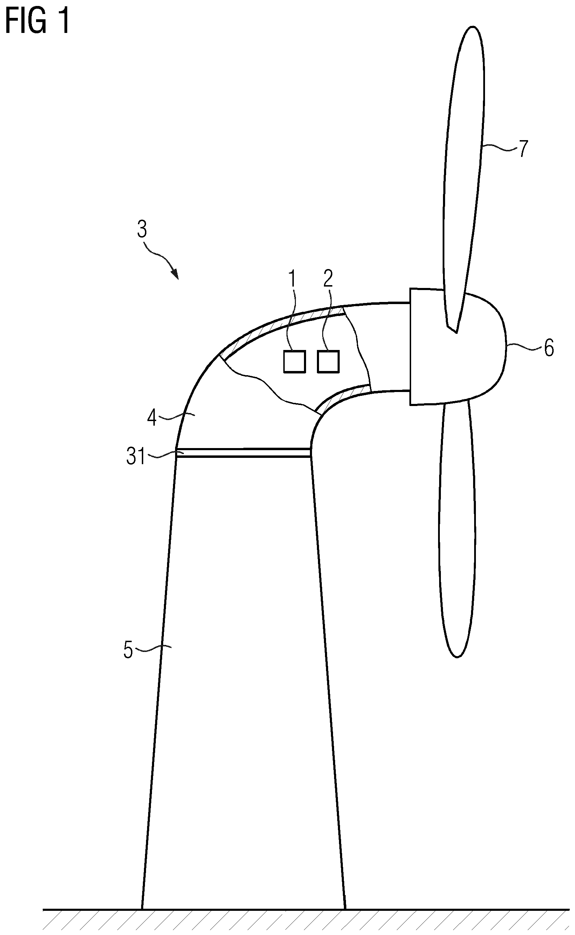

Fig. 1 shows a wind turbine comprising multiple components 1, 2 that are mounted to a structural element 4, 31 of the wind turbine 3. The structural element 4 is a nacelle that is mounted to the tower 5 via a further structural element 31, namely a bed frame of the wind turbine. The hub 6 that carries the blades 7 of the wind turbine 3 is mounted to the nacelle.

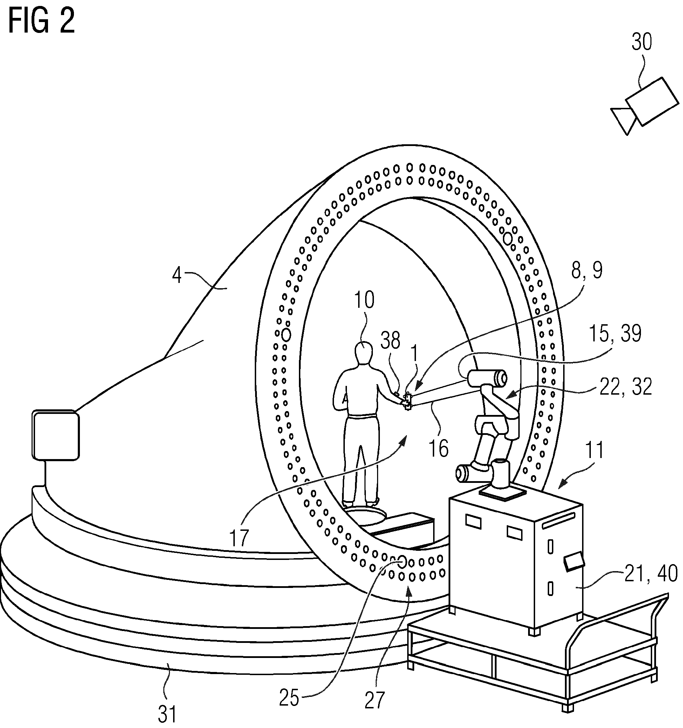

It is well known that in common wind turbines 3 a multitude of components 1, 2, e. g. cable trays or components mounted by magnet mounting need to be mounted to the structural elements 4, 31 of the wind turbine 3 with a high precision. This is typically done manually by a skilled worker. The placement and orientation of these components 1, 2 with respect to the structural elements 4, 31 can be quite tricky, since the inner surface 17 of e. g. the nacelle shown in fig. 2 is curved and does have hardly any features close to the desired mounting position 8 that would allow the worker 10 to easily find the correct mounting position 8 and orientation 9. To achieve a reasonable accuracy of the placement of the components 1, 2, extensive training of the worker 10 is typically necessary and it might still be necessary to occasionally demount and remount some of the components 1, 2 at a later point, since a sufficiently high precision can typically not be achieved reliably for each mounted component 1, 2.

To simplify the mounting of the components 1, 2, and therefore for reducing the necessary amount of training for the worker 10 and for robustly achieving a high precision of the mounting position 8 and orientation 9, the method for mounting the components 1, 2 is modified as described below.

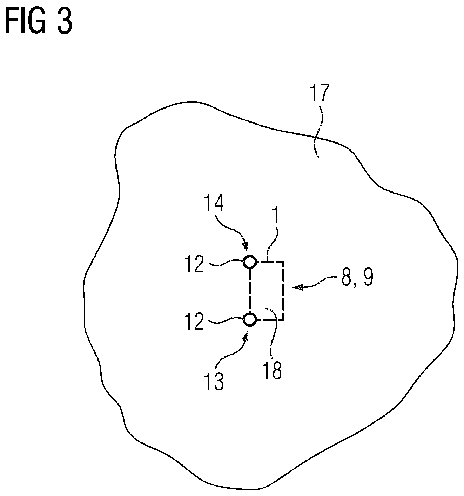

While the respective component 1, 2 is still manually placed in the respective predefined mounting position 8 and orientation 9 with respect to the structural element 4, 31 by the worker 10 and attached to the structural element 4, 31 in this mounting position 8 and orientation 9 in the modified method, the modified method additionally uses an indicator device 11 that is used to display at least one marker 12 shown in fig. 3 as two dots, that marks the mounting position 8 and orientation 9 and can e. g. coincide with features 13, 14 of the component 1, 2, e. g. the corners of the component 1 as shown in fig. 3, when the component 1, 2 is placed in the predefined mounting position 8 and orientation 9.

The worker 10 then simply needs to arrange the component in such a way that the edges of the component are aligned with the marker 12, as shown in fig. 3, and then mount the component 1, 2 in this position 8 and orientation 9. Complex measurements or elaborate training to find the correct mounting position 8 and orientation 9 are no longer required.

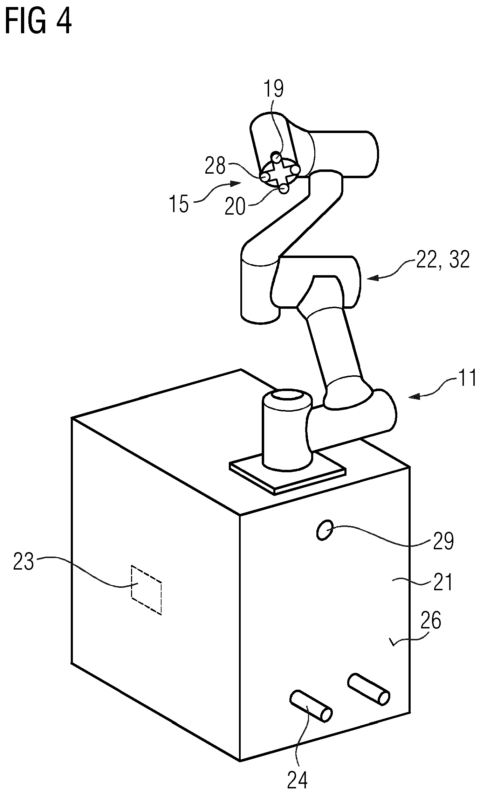

In the example of figs. 2 and 3, the indicator device 11, that is shown in more detail in fig. 4, comprises a projection device 15 that is used to project a light pattern 16 towards the surface 17 of the structural element 4. In the example the projection device 15 comprises two laser pointers 19, 20 that emit two light beams as a light pattern 16 as shown in fig. 2 that form the two dots that are shown as marker 12 in fig. 3 due to the diffuse reflection of this light pattern 16 by the surface 17 or by the surface 18 of the component 1, 2 once the component is placed in the correct position 8.

In the example shown in fig. 2 and 4, the indicator device additionally comprises a base 21 and an actuator 22 for moving and orienting the projection device 15 with respect to the base 21. This e. g. allows a change of the relative position of the projection device 15 and the base 21 and therefore of the relative position of the projection device 15 and the structural element 4, 31 when the base 21 is placed in a defined position with respect to the structural element 4, 31, to display the marker 12 in different defined positions and with different defined orientations. This can e. g. be used to position the marker 12 to indicate the mounting position and orientation of the component 2 once the component 1 is mounted in the correct position.

It is e. g. possible that the indicator device 11 is controlled by a wearable user interface 38, e. g. a user interface 38, comprising at least one button in the area of the wrist of the worker 10, that can be used to switch between different components 1, 2 to be mounted and therefore between different positions and orientations of the marker 12.

To allow for the indicator device 11 to operate in the same area as the worker 10 without elaborate security measures, it is e. g. possible to measure the forces acting on at least one module 32 of the indicator device 11, e. g. the robot arm forming the actuator 22 or the projection device 15, and to stop the actuator when this force exceeds a threshold, e. g. of 20 N. Alternatively or additionally, torques can be monitored and limited.

The actuator 22 can be controlled by a control unit 23 of the indicator device. Defined positions and orientations or poses of the projection device 15 that correspond to the respective correct position and orientation of the marker 12 for mounting a respective component 1, 2 can be learned by example. It is e. g. possible that the base 21 is always arranged in the same position with respect to the structural element 4, 31 to mount the components 1, 2 to the respective structural element 4, 31. Once the mounting of the components 1, 2 to the respective structural element 4, 31 is finished, this structural element 4, 31 is moved away and a new structural element 4, 31 of the same type is placed in the same position relative to the base 21. Alternatively, it is possible to position the base in different positions to mount the components 1, 2 to different structural elements 4, 31 of the same type, wherein the same relative position to the respective structural element 4, 31 that provides the surface 17 for mounting is always achieved.

A defined position of the base 21 with respect to the structural elements 4, 31 can e. g. be achieved by providing a form fit between the base 21 and the structural element 4, 31. In the example the base 21 is provided with pegs 24 that can be inserted into holes 25 of the structural element 4. At the same time the flange of a structural element 4 provides a stop 27 for the surface 26 of the base 21. While the structural element 4 is directly used as a stop 27 and to provide a form fit, it is also sufficient to provide either a form fit or a stop and the form fit and/or the stop could also be provided by a further component that is arranged in a well-defined position with respect to the structural element 4, e. g. by a stop mounted to a floor in a defined position.

To teach the correct marker position to the indicator device 11, the base 21 can be positioned in the correct position with respect to a reference structural element and reference components can be mounted to the structural element by an extremely well-trained expert and/or be placed by other, more elaborate positioning means, since this approach to the positioning and orienting of the components is only necessary to perform once. The projection device can then e. g. be manually moved while the light pattern 16 is emitted to align the marker with the respective reference component and pose information describing the final pose of the projection device 15 can be recorded. By recording pose information for each of the reference components, the respective pose and therefore the respective relative position and orientation of the projection device 15 with respect to the base 21 and therefore with respect to the structural element 4, 31 can be repeated later, when the respective component is to be mounted to a structural element 4, 31.

The previous description relies on the base 21 to be in a defined position with respect to the structural element 4, 31. If this cannot be guaranteed or for validation reasons it is also possible to determine the position and orientation of at least one module 32, 39, 40 of the indicator device 11, especially of the base 21 and/or the projection device 15, with respect to the structural element 4, 31 or some further component having a defined position and orientation with respect to the structural element 4, 31 using at least one sensor 28, 29, 30. The sensors 28, 29, 30 can e. g. be cameras, sensors for ultrasound distance measurements, laser scanners, radar sensors, etc.

In the example, the sensor 29 is mounted to the base 21 and the sensor 28 is mounted to the projection device 15 of the indicator device 11 and the sensor 30 is mounted in the production hall used to mount the components 1, 2 to the structural elements 4, 31. Various approaches for determining relative positions of different components by the use of sensor data are well known in the prior art and will not be discussed in detail. The actuator 22 can then be controlled by the control unit 23 based on the determined position and/or orientation of the module or modules with respect to the structural component 4, 31.

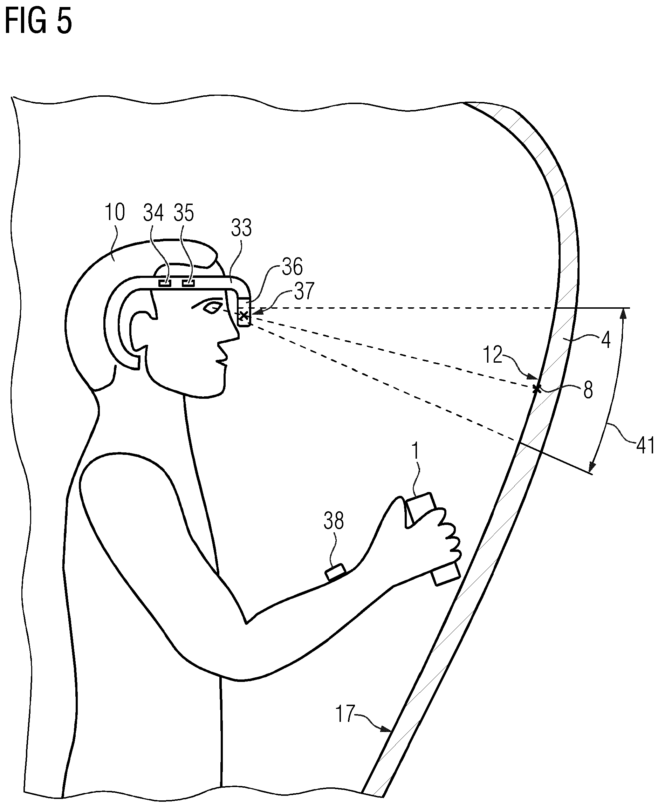

While the previously discussed approach of using a projection device 15 to display the marker 12 combines a very good precision with rather low technical complexity, in some use cases it might be advantageous to use a different indicator device. In the example shown in fig. 5, the indicator device 33 is formed by an augmented reality headset that superimposes the marker 12 into the field of view 41 of the worker 10.

The augmented reality headset 33 comprises a positioning device 34 to determine the relative position and orientation of the augmented reality headset in a defined coordinate system and therefore especially with respect to the surface 17 of the structural element 4, a control unit 35 and a display device 36 controlled by the control unit 35 depending on position information determined by the positioning device 34. To display the marker 12, an area 37 of the display device 36 is controlled, e. g. to blackout a certain region of a liquid crystal display used as a display device 36, to superimpose the marker 12 in the correct position in the field of view 41 of the worker 10.

While the use of an augmented reality headset as an indicator device 33 typically requires a higher technical complexity to achieve the same precision for the placement and orientation of the components 1, 2 then the previously discussed indicator device 11 using a projection device 15, the use of an augmented reality headset might e. g. advantageous when a complex geometry of the structural element 4, 31 would lead to the requirement of a very complex actuator 22 to move the projection device 15 in all relevant positions to display all relevant markers.

Although the present invention has been described in detail with reference to the preferred embodiment, the present invention is not limited by the disclosed examples from which the skilled person is able to derive other variations without departing from the scope of the invention.

## Claims

1. Method for mounting at least one component (1, 2) of a wind turbine (3) to a structural element (4, 31) of the wind turbine (3), wherein the respective component (1, 2) is manually placed in a respective predefined mounting position (8) and/or orientation (9) with respect to the structural element (4, 31) by a worker (19) and attached to the structural element (4, 31) in this mounting position (8) and/or orientation (9), wherein an indicator device (11, 33) is used to display at least one marker (12) for the worker (10) that marks the respective mounting position (8) and/or orientation (9) and/or that coincides with a particular feature (13, 14) of the component (1, 2) when the component (1, 2) is placed in the respective predefined mounting position (8) and/or orientation (9), wherein a projection device (15) of the indicator device (11) is used to project a light pattern (16) towards a surface (17) of the structural element (4, 31) to which the respective component (1, 2) is to be mounted, wherein the marker (12) is formed by, preferably diffuse, reflection of the light pattern (16) by the surface (17) of the structural element (4, 31) and/or at least one surface (18) of the component (1, 2), wherein the indicator device (11) comprises the at least one projection device (15) and a base (21), **characterized in that** the indicator device (11) additionally comprises at least one actuator (22) for moving and/or orienting the projection device (15) with respect to the base (21), wherein the actuator (22) is controlled to position and/or orient the projection device (15) prior to and/or during the projection of the light pattern (16) to position and/or orient and/or scale the respective marker (12), wherein the force provided by the actuator (22) and/or the force acting on at least one module (32) of the indicator device, especially a component connecting the base (21) to the projection device (15), is measured and a further movement of the actuator (22) is stopped, when the force exceeds a respective given threshold.

2. Method according to claim 1, **characterized in that** the projection device (15) comprises one or two laser pointers (19, 20) or **in that** two projection devices (15) of the indicator device (11) are used to display a respective marker (12), wherein each projection device (15) comprises a laser pointer (19, 20).

3. Method according to claim 1 or 2, wherein multiple components (1, 2) are mounted to the structural element (4, 31) of the wind turbine (3) in a respective predefined mounting position (8) and/or orientation (9), **characterized in that** the actuator (22) is controlled to change the position and/or orientation of the projection device (15) after at least one of the components (1, 2) is attached to the structural element (4, 31) to change the position and/or orientation of the marker (12) with respect to the structural element (4, 31) before a further one of the components (1, 2) is placed in its predefined mounting position (8) and/or orientation (9).

4. Method according to one of the preceding claims, **characterized in that** actuator (22) is controlled to position and/or orient the projection device (15) in a predefined pose prior to and/or during the projection of the light pattern (16) to form the respective marker (12), wherein the predefined pose is defined in a preparatory step by manually adjusting the pose of the projection device (15), especially while the light pattern (16) is emitted, and recording pose information describing this pose via the actuator (22) and/or at least one sensor (28, 29, 30).

5. Method according to one of the preceding claims, **characterized in that** the indicator device (11), especially the base (21) of the indicator device (11), is connected to the structural element (4, 31) and/or to a further component, the further component having a defined position and/or orientation with respect to the structural element (4, 31), by a form fit and/or positioned against at least one respective mechanical stop (27) formed by the structural element (4, 31) or the further component to define the relative position and orientation of the base (21) with respect to the structural element (4, 31) prior to and/or during the projection of the light pattern (16) towards a surface (17) of the structural element (4, 31).

6. Method according to one of the preceding claims, **characterized in that** the position and/or orientation of at least one module (32, 39, 40) of the indicator device (11), especially of the base (21) and/or the projection device (15), with respect to the structural element (4, 31) or to a further component, the further component having a defined position and/or orientation with respect to the structural element (4, 31), is determined using at least one sensor (28, 29, 30), wherein the actuator (22) is controlled to position and/or orient the projection device (15) depending on the determined position and/or orientation of the module (32, 39, 40) of the indicator device (11).

7. Method according to one of the preceding claims, **characterized in that** the structural element (4, 31) is a bedframe and/or nacelle, especially a nacelle having a gooseneck shape, of the wind turbine (3).

8. Method according to one of the preceding claims, **characterized in that** the attachment of the component (1, 2) to the structural element (4, 31) is performed by magnet mounting and/or welding and/or using holes formed by drilling.

9. Method for assembling a wind turbine, wherein the method comprises a step of attaching at least one component (1, 2) to a structural element (4, 31) of the wind turbine (3), **characterized in that** this step is performed using the method of one of the preceding claims.

10. Indicator device, **characterized in that** it is designed to be used as the indicator device (11, 33) in the method of one of the claims 1 to 9.

## Patentansprüche

1. Verfahren zum Montieren mindestens einer Komponente (1, 2) einer Windkraftanlage (3) an ein Strukturelement (4, 31) der Windkraftanlage (3), wobei die jeweilige Komponente (1, 2) durch einen Arbeiter (19) in eine jeweilige vordefinierte Montageposition (8) und/oder Ausrichtung (9) bezüglich des Strukturelements (4, 31) manuell platziert wird und in dieser Montageposition (8) und/oder Ausrichtung (9) an dem Strukturelement (4, 31) befestigt wird, wobei eine Anzeigevorrichtung (11, 33) verwendet wird, um mindestens eine Markierung (12) für den Arbeiter (10) anzuzeigen, die die jeweilige Montageposition (8) und/oder Ausrichtung (9) anzeigt und/oder die mit einem bestimmten Merkmal (13, 14) der Komponente (1, 2) übereinstimmt, wenn die Komponente (1, 2) in der jeweiligen vordefinierten Montageposition (8) und/oder Ausrichtung (9) platziert ist, wobei eine Projektionsvorrichtung (15) der Anzeigevorrichtung (11) verwendet wird, um ein Lichtmuster (16) auf eine Oberfläche (17) des Strukturelements (4, 31) zu projizieren, an das die jeweilige Komponente (1, 2) montiert werden soll, wobei die Markierung (12) durch, bevorzugt diffuse, Reflexion des Lichtmusters (16) durch die Oberfläche (17) des Strukturelements (4, 31) und/oder mindestens eine Oberfläche (18) der Komponente (1, 2) gebildet wird, wobei die Anzeigevorrichtung (11) die mindestens eine Projektionsvorrichtung (15) und eine Basis (21) umfasst, **dadurch gekennzeichnet, dass** die Anzeigevorrichtung (11) zusätzlich mindestens einen Aktuator (22) zum Bewegen und/oder Ausrichten der Projektionsvorrichtung (15) bezüglich der Basis (21) umfasst, wobei der Aktuator (22) gesteuert wird, um die Projektionsvorrichtung (15) vor und/oder während der Projektion des Lichtmusters (16) zu positionieren und/oder auszurichten, um die jeweilige Markierung (12) zu positionieren und/oder auszurichten und/oder zu skalieren, wobei die Kraft, die von dem Aktuator (22) bereitgestellt wird, und/oder die Kraft, die auf mindestens ein Modul (32) der Anzeigevorrichtung, insbesondere eine Komponente, die die Basis (21) mit der Projektionsvorrichtung (15) verbindet, wirkt, gemessen wird und eine weitere Bewegung des Aktuators (22) angehalten wird, wenn die Kraft einen jeweiligen vorgegebenen Schwellenwert überschreitet.

2. Verfahren nach Anspruch 1, **dadurch gekennzeichnet, dass** die Projektionsvorrichtung (15) einen oder zwei Laserpointer (19, 20) umfasst oder dass zwei Projektionsvorrichtungen (15) der Anzeigevorrichtung (11) verwendet werden, um eine jeweilige Markierung (12) anzuzeigen, wobei jede Projektionsvorrichtung (15) einen Laserpointer (19, 20) umfasst.

3. Verfahren nach Anspruch 1 oder 2, wobei mehrere Komponenten (1, 2) in einer jeweiligen vordefinierten Montageposition (8) und/oder Ausrichtung (9) an das Strukturelement (4, 31) der Windkraftanlage (3) montiert werden, **dadurch gekennzeichnet, dass** der Aktuator (22) gesteuert wird, um die Position und/oder Ausrichtung der Projektionsvorrichtung (15) zu verändern, nachdem mindestens eine der Komponenten (1, 2) an dem Strukturelement (4, 31) befestigt worden ist, um die Position und/oder Ausrichtung der Markierung (12) bezüglich des Strukturelements (4, 31) zu verändern, bevor eine weitere der Komponenten (1, 2) in ihrer vordefinierten Montageposition (8) und/oder Ausrichtung (9) platziert wird.

4. Verfahren nach einem der vorhergehenden Ansprüche, **dadurch gekennzeichnet, dass** der Aktuator (22) gesteuert wird, um die Projektionsvorrichtung (15) vor und/oder während der Projektion des Lichtmusters (16) in einer vordefinierten Stellung zu positionieren und/oder auszurichten, um die jeweilige Markierung (12) zu bilden, wobei die vordefinierte Stellung in einem Vorbereitungsschritt durch manuelles Einstellen der Stellung der Projektionsvorrichtung (15), insbesondere während das Lichtmuster (16) emittiert wird, und Aufzeichnen der Stellungsinformationen, die diese Stellung beschreiben, über den Aktuator (22) und/oder mindestens einen Sensor (28, 29, 30) definiert wird.

5. Verfahren nach einem der vorhergehenden Ansprüche, **dadurch gekennzeichnet, dass** die Anzeigevorrichtung (11), insbesondere die Basis (21) der Anzeigevorrichtung (11), mit dem Strukturelement (4, 31) und/oder mit einer weiteren Komponente verbunden ist, wobei die weitere Komponente eine definierte Position und/oder Ausrichtung bezüglich des Strukturelements (4, 31) aufweist, durch einen Formschluss und/oder dadurch, dass sie gegen mindestens einen jeweiligen mechanischen Anschlag (27) positioniert wird, der durch das Strukturelement (4, 31) oder die weitere Komponente gebildet ist, um die relative Position und Ausrichtung der Basis (21) bezüglich des Strukturelements (4, 31) vor und/oder während der Projektion des Lichtmusters (16) auf eine Oberfläche (17) des Strukturelements (4, 31) zu definieren.

6. Verfahren nach einem der vorhergehenden Ansprüche, **dadurch gekennzeichnet, dass** die Position und/oder Ausrichtung mindestens eines Moduls (32, 39, 40) der Anzeigevorrichtung (11), insbesondere der Basis (21) und/oder der Projektionsvorrichtung (15), bezüglich des Strukturelements (4, 31) oder einer weiteren Komponente, wobei die weitere Komponente eine definierte Position und/oder Ausrichtung bezüglich des Strukturelements (4, 31) aufweist, unter Verwendung mindestens eines Sensors (28, 29, 30) bestimmt wird, wobei der Aktuator (22) gesteuert wird, um die Projektionsvorrichtung (15) in Abhängigkeit von der bestimmten Position und/oder Ausrichtung des Moduls (32, 39, 40) der Anzeigevorrichtung (11) zu positionieren oder auszurichten.

7. Verfahren nach einem der vorhergehenden Ansprüche, **dadurch gekennzeichnet, dass** das Strukturelement (4, 31) ein Tragrahmen und/oder eine Maschinengondel der Windkraftanlage (3), insbesondere eine Maschinengondel, die eine Schwanenhalsform aufweist, ist.

8. Verfahren nach einem der vorhergehenden Ansprüche, **dadurch gekennzeichnet, dass** die Befestigung der Komponente (1, 2) an dem Strukturelement (4, 31) durch Magnetmontage und/oder Schweißen und/oder Verwenden von Löchern, die durch Bohren gebildet werden, durchgeführt wird.

9. Verfahren zum Zusammenbauen einer Windkraftanlage, wobei das Verfahren einen Schritt des Befestigens mindestens einer Komponente (1, 2) an einem Strukturelement (4, 31) der Windkraftanlage (3) umfasst, **dadurch gekennzeichnet, dass** dieser Schritt unter Verwendung des Verfahrens nach einem der vorhergehenden Ansprüche durchgeführt wird.

10. Anzeigevorrichtung, **dadurch gekennzeichnet, dass** sie dafür ausgelegt ist, als die Anzeigevorrichtung (11, 33) in dem Verfahren nach einem der Ansprüche 1 bis 9 verwendet zu werden.

## Revendications

1. Procédé de montage d'au moins un composant (1, 2) d'une éolienne (3) sur un élément structurel (4, 31) de l'éolienne (3), dans lequel le composant respectif (1, 2) est placé manuellement dans une position de montage (8) et/ou une orientation (9) prédéfinie(s) respective(s) par rapport à l'élément structurel (4, 31) par un ouvrier (19) et fixé à l'élément structurel (4, 31) dans cette position de montage (8) et/ou cette orientation (9),
dans lequel un dispositif d'indication (11, 33) est utilisé pour afficher au moins un marqueur (12) pour l'ouvrier (10) qui marque la position de montage (8) et/ou l'orientation (9) respective(s) et/ou qui coïncide avec une caractéristique particulière (13, 14) du composant (1, 2) lorsque le composant (1, 2) est placé dans la position de montage (8) et/ou l'orientation (9) prédéfinie(s) respective(s), dans lequel un dispositif de projection (15) du dispositif d'indication (11) est utilisé pour projeter un motif lumineux (16) vers une surface (17) de l'élément structurel (4, 31) sur lequel le composant respectif (1, 2) doit être monté, dans lequel le marqueur (12) est formé par une réflexion, de préférence diffuse, du motif lumineux (16) par la surface (17) de l'élément structurel (4, 31) et/ou au moins une surface (18) du composant (1, 2), dans lequel le dispositif d'indication (11) comprend l'au moins un dispositif de projection (15) et une base (21), **caractérisé en ce que** le dispositif d'indication (11) comprend en outre au moins un actionneur (22) pour déplacer et/ou orienter le dispositif de projection (15) par rapport à la base (21), dans lequel l'actionneur (22) est commandé pour positionner et/ou orienter le dispositif de projection (15) avant et/ou pendant la projection du motif lumineux (16) afin de positionner et/ou d'orienter et/ou de mettre à l'échelle le marqueur respectif (12), dans lequel la force fournie par l'actionneur (22) et/ou la force agissant sur au moins un module (32) du dispositif d'indication, en particulier un composant reliant la base (21) au dispositif de projection (15), est mesurée et un mouvement supplémentaire de l'actionneur (22) est arrêté lorsque la force dépasse un seuil donné respectif.

2. Procédé selon la revendication 1, **caractérisé en ce que** le dispositif de projection (15) comprend un ou deux pointeur(s) laser (19, 20) ou **en ce que** deux dispositifs de projection (15) du dispositif d'indication (11) sont utilisés pour afficher un marqueur respectif (12), dans lequel chaque dispositif de projection (15) comprend un pointeur laser (19, 20).

3. Procédé selon la revendication 1 ou 2, dans lequel plusieurs composants (1, 2) sont montés sur l'élément structurel (4, 31) de l'éolienne (3) dans une position de montage (8) et/ou une orientation (9) prédéfinie(s) respective(s), **caractérisé en ce que** l'actionneur (22) est commandé pour modifier la position et/ou l'orientation du dispositif de projection (15) après qu'au moins l'un des composants (1, 2) est fixé à l'élément structurel (4, 31) afin de modifier la position et/ou l'orientation du marqueur (12) par rapport à l'élément structurel (4, 31) avant qu'un composant supplémentaire des composants (1, 2) ne soit placé dans sa position de montage (8) et/ou son orientation (9) prédéfinie(s) .

4. Procédé selon l'une des revendications précédentes, **caractérisé en ce que** l'actionneur (22) est commandé pour positionner et/ou orienter le dispositif de projection (15) dans une pose prédéfinie avant et/ou pendant la projection du motif lumineux (16) afin de former le marqueur respectif (12), dans lequel la pose prédéfinie est définie lors d'une étape préparatoire en ajustant manuellement la pose du dispositif de projection (15), en particulier pendant l'émission du motif lumineux (16), et en enregistrant les informations de pose décrivant cette pose via l'actionneur (22) et/ou au moins un capteur (28, 29, 30).

5. Procédé selon l'une des revendications précédentes, **caractérisé en ce que** le dispositif d'indication (11), en particulier la base (21) du dispositif d'indication (11), est relié à l'élément structurel (4, 31) et/ou à un composant supplémentaire, le composant supplémentaire ayant une position et/ou une orientation définie(s) par rapport à l'élément structurel (4, 31), par un ajustement de forme et/ou positionné contre au moins une butée mécanique respective (27) formée par l'élément structurel (4, 31) ou le composant supplémentaire afin de définir la position et l'orientation relatives de la base (21) par rapport à l'élément structurel (4, 31) avant et/ou pendant la projection du motif lumineux (16) vers une surface (17) de l'élément structurel (4, 31).

6. Procédé selon l'une des revendications précédentes, **caractérisé en ce que** la position et/ou l'orientation d'au moins un module (32, 39, 40) du dispositif d'indication (11), en particulier de la base (21) et/ou du dispositif de projection (15), par rapport à l'élément structurel (4, 31) ou à un composant supplémentaire, le composant supplémentaire ayant une position et/ou une orientation définie(s) par rapport à l'élément structurel (4, 31), est déterminée en utilisant au moins un capteur (28, 29, 30), dans lequel l'actionneur (22) est commandé pour positionner et/ou orienter le dispositif de projection (15) en fonction de la position et/ou de l'orientation déterminée(s) du module (32, 39, 40) du dispositif d'indication (11).

7. Procédé selon l'une des revendications précédentes, **caractérisé en ce que** l'élément structurel (4, 31) est un châssis et/ou une nacelle, en particulier une nacelle ayant une forme de col de cygne, de l'éolienne (3).

8. Procédé selon l'une des revendications précédentes, **caractérisé en ce que** la fixation du composant (1, 2) à l'élément structurel (4, 31) est réalisée par montage magnétique et/ou soudage et/ou en utilisant des trous formés par perçage.

9. Procédé d'assemblage d'une éolienne, dans lequel le procédé comprend une étape de fixation d'au moins un composant (1, 2) à un élément structurel (4, 31) de l'éolienne (3), **caractérisé en ce que** cette étape est réalisée en utilisant le procédé de l'une des revendications précédentes.

10. Dispositif d'indication, **caractérisé en ce qu'**il est conçu pour être utilisé comme dispositif d'indication (11, 33) dans le procédé selon l'une des revendications 1 à 9.
